# EUROPEAN PATENT APPLICATION

(11) **EP 2 453 395 A1**
(43) Date of publication of application: **16.05.2012**
(21) Application number: 10191236.8
(22) Date of filing: 15.11.2010
(51) Int. Cl.: G06Q 10/00

(54) **Method and system to analyze processes**

(71) Applicant: Deloitte Innovation B.V., 3072 AP Rotterdam (NL)
(72) Inventor: Verdonk, Martinus Cornelis, 3453 MV De Meern (NL); Pommerel, Willem Henri Hermanus, 2595 HP Den Haag (NL); Scheper, Willem Johannes, 3994 HD Houten (NL)
(74) Representative: Grootscholten, Johannes A.M.

(57) **Abstract**

The present invention relates to a method and a system to analyze at least one process comprising at least one subprocess with at least one transaction of handling at least one item, the method comprising:
- creating a database containing all information with respect to transactions on the item,
characterized by:
- gathering from at least one source, such as a tables in an information system, all data with respect to each previously completed transaction in the process on each of the at least one item;
- assigning an identifying label to each of the at least one item; and
- arranging the data with respect to each performed transaction in the process on each of the at least one item with the label assigned thereto in the database, so as to allow distilling from the database at least one sequence of previously performed transactions in the process with respect to each of the at least one item on the basis of the label assigned thereto.

As a result, according to the invention more accurate and detailed analysis of processes is achieved, and even achieving at all times a goodness of fit of 1.0, without any spurious correlations.

## Description

### 1. Technical field

The present invention relates to a method and a system to analyze processes, in particular though not exclusively business processes, in particular inside or between one or more public and or private companies.

### 2. Description of Related Art

Processes in companies, regardless of the nature of such processes (production or bookkeeping steps including such activities as order-to-cash, purchase-to-pay (P2P), and the like) are supported by information systems. These information systems enable actors in these processes to perform activities, e.g. by presenting an actor with options for activities in a graphical user interface. When actors perform these activities in such information system, it typically results in the information system changing (create, update or delete) transaction data that is stored over multiple tables in a database to record the event that has occurred. Such changes of this transaction data enable the information system to present other activities to be performed to the same or other actors, leading to more changes in the transaction data, etc. The information system might also keep a log of the activities performed.

It is generally known that processes, such as business processes, can most often be analyzed real time using these log files. Together, entries in such a log file can often already yield very usable information about the manner in which for instance business processes are executed and in which items, such as invoices, partially completed products and the like, progress through a sequence to form processes.

However these logs also have limitations as persons may corrupt a log through misuse or even abuse or even sabotage. It is a well known fact that log files are more easily manipulated or even corrupted than for instance the transaction data in an information system, because of the inherent relationships and/or dependencies in or between the information entries in information systems, which are missing in log systems and log files.

Automated logging systems - if at all provided inside or separately from the information system, to prevent such log files from becoming unreliable for whatever reason - are known to require immense resources to operate. To overcome this resource restriction log files provided through log systems usually provide only rough and basic information over a limited period in time, but fail to provide information to the level of detail that is required for - for example - an accountants audit or the like.

Log files normally have a preset size. Once a preset limitation in size is reached, log systems start to overwrite the oldest entries in the log files, to keep a record of the most recent history within a time frame corresponding with the preset size of the log files. Again, under such preconditions, log files fail to provide an often highly desired high degree of accuracy and over an insufficiently long time span, for purposes such as accountant's audits.

Additionally, log files are known to add tremendous amounts of additional information relative to the basic log data, where the additional data is sometimes referred to as metadata (or by another name), such as file owner information, file permissions, and more additional log information. Such additional log information is mainly for the benefit of the log files and log systems themselves, but do not contribute to insight into processes or logged steps in an organization and moreover result in considerable increases in expenses, efforts and times for retrieving information there from, when insight into processes is required.

Methods and systems to use log files for the analyzing of for instance production or business processes, including the manner of obtaining and presenting information from a log file, are known from a great diversity of related art references, of which merely as examples reference is made here to the disclosures in US-2007/0021995 and US-2009/0055203.

Also, a system is known in practice, which is called "PRoM", and which has been developed under supervision of the Technical University of Eindhoven, the Netherlands. All this related art uses a technique that is (related to) process mining to analyze log files.

A key characteristic of process mining techniques and the like is that it utilizes a wide variety of statistical algorithms to analyze log files and derive a process model. Due to the statistical nature of these algorithms an important quality criterion for this derived process model is the goodness of fit indicator with the source log file (i.e. the extent to which all information captured in the log can be projected over the derived process model). In scientific applications a goodness of fit ration above a certain threshold (e.g. 0.8) represents an appropriate model. However with a goodness of fit of anything below 1.0, relations that are kept in the log, but in a very low frequency, can be and often are disregarded and spurious correlations (relations that are not actually in the log) can be discovered. It is these characteristics that make such analysis unsuitable for such detailed analysis and analyzing processes to enable for instance an accountant's audit as for this purpose precisely because anomalies and deviations from expectations provide the most useful information about the actual processes, whereas the prior art systems explicitly aim to disregard such information.

### SUMMARY OF THE INVENTION

According to the present invention, a new method and system are proposed, exhibiting all features of the appended independent method and system claims. As a consequence of the invention as defined in at least the appended independent method and apparatus claims, a posteriori a database is constructed from transaction data in the information system tables. Such information goes back much further than in customary log files, and is moreover much more accurate and reliable than log files since the information therein is more difficult to even find, let alone access and amend on purpose or by accident. Further, the transaction data in the tables of information systems is devoid of polluting metadata or other additional information, which inherently make log files unsuitable to allow for quick access and/or full analysis. Thus, a new approach is employed that enables the full use of all transaction data that is normally available in common place sources, such as for instance a multitude of tables in information systems. Such full availability of the all information possibly relevant for a proper analysis of processes is thus acquired a posteriori and may result in a reconstruction of any process in its entirety and as it has is fact and truth actually been executed. Speaking in statistical terms this implies a goodness of fit that is by necessity 1.0 and not containing any spurious correlations. It is this change from a log to the more undisputable and detailed transaction data in information systems, in combination with a method to ensure goodness of fit 1.0 without spurious correlations, that makes this invention of particular use for acquiring insight and evidence into processes to the level that is required for an accountants audit or the like. Notwithstanding this notion of an audit by an accountant, normally managers are also more interested in analyzing processes, in particular to detect anomalies and deviations from expectations, without any restrictions to presumptions about the design of the business process, precisely in order to be able to prevent such anomalies or deviations from occurring, which is only possible after having detected such anomalies and deviations in a reliable manner, which has now been made possible with the present invention. Alternatively or additionally, being able to detect such anomalies and deviations could usefully be interpreted as indications of possible improvements upon presumed optimal processes in sequences of events, and in such cases being able to identify the anomalies and deviations relative to presumptions and expectations will lead to incorporating improvements in processes.

As a further advantage of methods and systems according to the present invention, it is noted here that the level of detail, obtainable thereby, is considerably increased as a consequence of the employed approach and use of the transaction data without loss of or disregarding any possibly relevant information. Where prior art methods and systems for analyzing processes based on logs stop at providing information on volumes (numbers) of items following specific sequences of transactions or of events, the method and system according to the present application allow for full insight into all aspects of the items, including values rather than just volumes, the process traces or events sequentially occurring within the processes, persons involved, and any and all other information in as far as such further information is present in the transaction data source (memory).

In particular, to achieve such a level of detail, attribute information from the information system can be included into the database, in particular item attribute information and / or event information, which can equally well be distilled from the source (memory), to provide a useful and detailed insight into processes, in as far as labels according to the independent method and system claims are employed for linking the items to events as well as the item and event attribute information. Consequently, the invention allows for detailed analysis also of certain considerations, such as risk queries and the like, on the basis of inherent relationships and dependencies in the transaction data from the information system, or on the basis of specific algorithms and calculations directed at such analyses.

For instance, domain expertise to even further extend the usefulness of the database can be applied to derive relevant information from transaction data by applying logic to this transaction data to retrospectively determine if certain rules or procedures, such as business rules, were applied correctly or have been violated, on the basis of the a posteriori built database that is constructed from the transaction data in information systems.

Yet further, the invention provides for a considerable increase in the perspectives from which processes, sub processes and events forming part of the processes, and other points of view can be analyzed and even visualized on the basis of the new and inventive construction of the database, i.e. from the transaction data source (memory) and including labels, as well as optionally also item attribute information and / or transaction attribute information. The invention further allows for coupling or linking processes, which exhibit relationships with one another.

It is further noted, that the construction of a database according to the present invention allows for many beneficial opportunities, that elude the prior art. For instance it is possible to construct the database using one of several selectable perspectives, and perform end-to-end analyses from each of several such perspectives, and even after a database is constructed, it remains possible to alter such a perspective.

Further embodiments and advantages thereof according to preferred embodiments thereof will become clearer from the appended dependent claims and the description of a limited number of such preferred embodiments herein below, which are nonetheless merely provided by way of example and not by way of limitation or restriction.

### BRIEF DESCRIPTION OF THE DRAWINGS

Herein below, preferred embodiments of the present invention will be elucidated in detail, with reference to the appended drawings, in which embodiments are exhibited which are merely preferred since the scope of the present invention is defined in the appended claims. Moreover, in the drawings, reference numbers may be unitary for similar or identical elements, components or features of any method and/or a system according to the present invention, and the drawings show in:
Figure 1 a schematic representation of the manner in which according to the present invention a database is constructed from transaction data to contain detailed process information, attributes and domain or organisational expertise from which much and highly detailed information about processes and the processing of items may be obtained, without employing vulnerable log files;
Figure 2A and 2B a schematic view corresponding with figure 1 on the basis of data processing to obtain an event database starting with transaction data from an information system in a plurality of separate tables;
Figure 3A a process and thus event based schematic representation obtainable with a graphic user interface and manipulation program from a database obtainable with a method and system according to the invention;
Figure 3B a detail from figure 3A of a slide ruler in the graphic user interface and manipulation program to adapt a perspective and a degree of detail of a representation distilled from the database;
Figure 4A a detail of a representation corresponding with (but not identical to) that of Figure 3A showing thickness of lines to indicate either volume or value of process traces;
Figure 4B an overview summary of the graphic representation of Figure 4A;
Figure 4C a graphic representation corresponding with the distilled processes as of Figure 4A and 4B, but from the alternative perspective of "people";
Figure 5A a view corresponding with that of figure 3A, showing a graphic user interface screen for a user to set a filter with, for filtering - in many different ways - the information in the database according to the invention to thus unambiguously limit the number of traces in scope for the calculations and the graphic representation thereof;
Figure 5B a view of an alternative graphic user interface for setting another filter relative to the filter interface of Figure 5A, to show the real language design of the filters as well as the numerous possibilities of filters in conjunction with the database according to the present invention;
Figure 6 an alternative representation of data in the database according to the present invention from a different perspective ("pattern"), based on the same event database as Figures 4A - 4C, which representation of Figure 6 is obtainable by changing the perspective in the graphic user interface and manipulation program, that acts on and in combination with the database according to the present invention;
Figure 7 yet another alternative representation of data in the database according to the present invention from yet another different perspective ("people"); and
Figure 8 yet another alternative representation of data in the database according to the present invention from yet another different perspective ("risk").

### DETAILED DESCRIPTION OF PREFERRED EMBODIMENTS

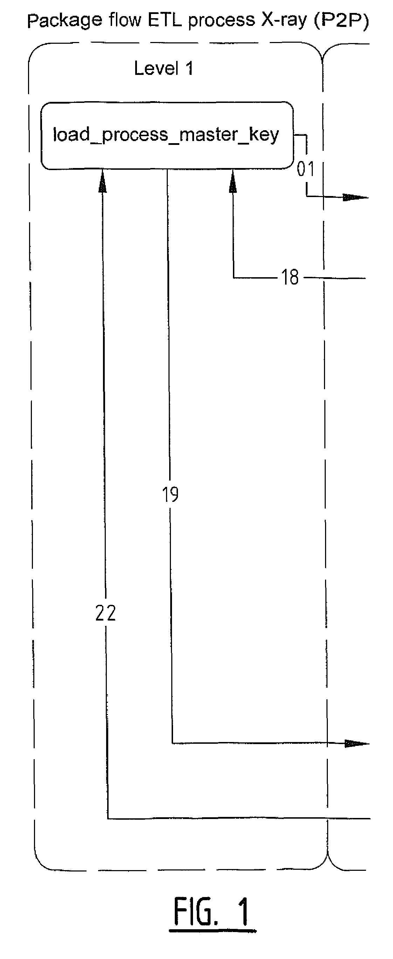

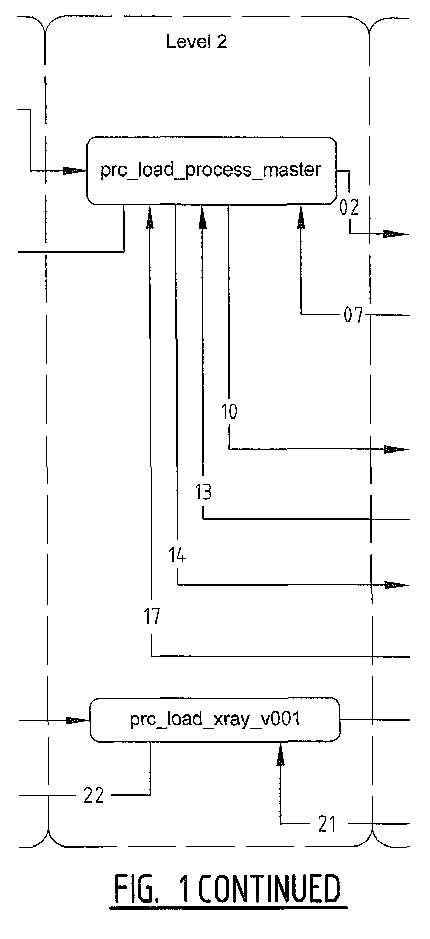

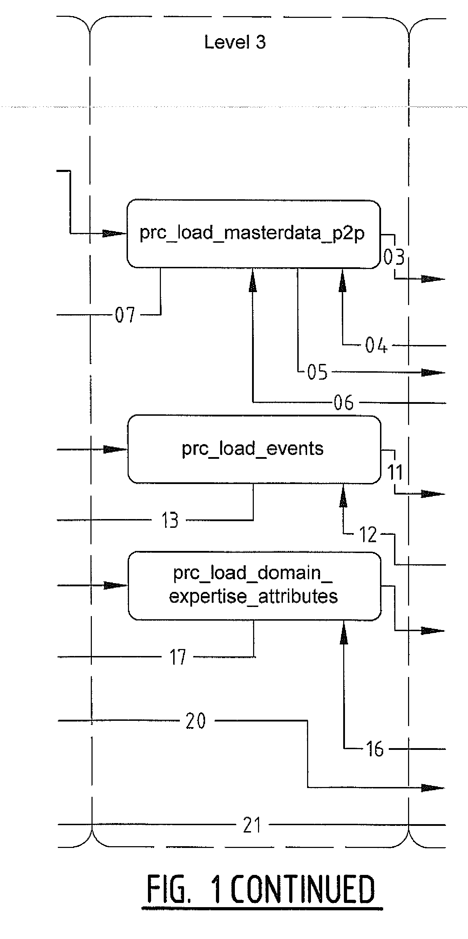

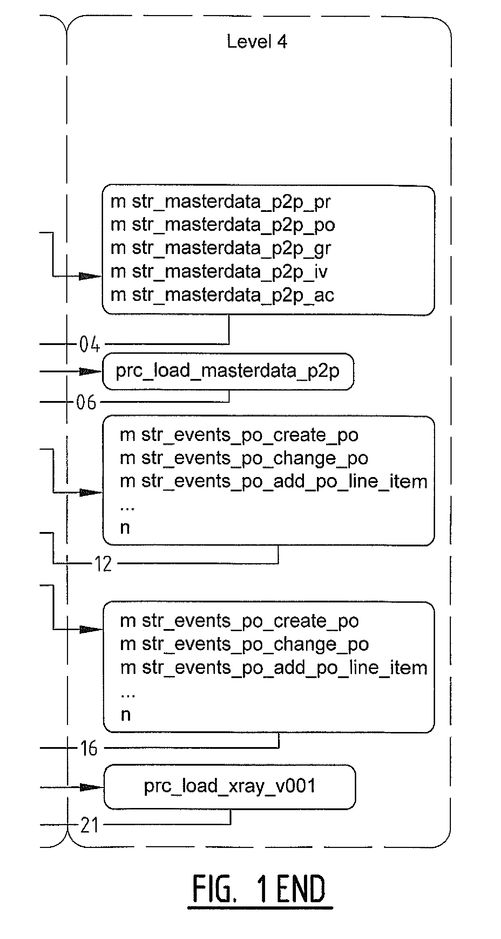

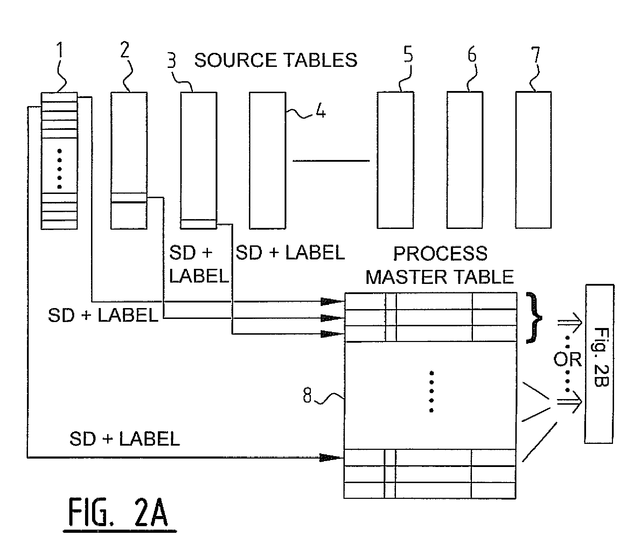

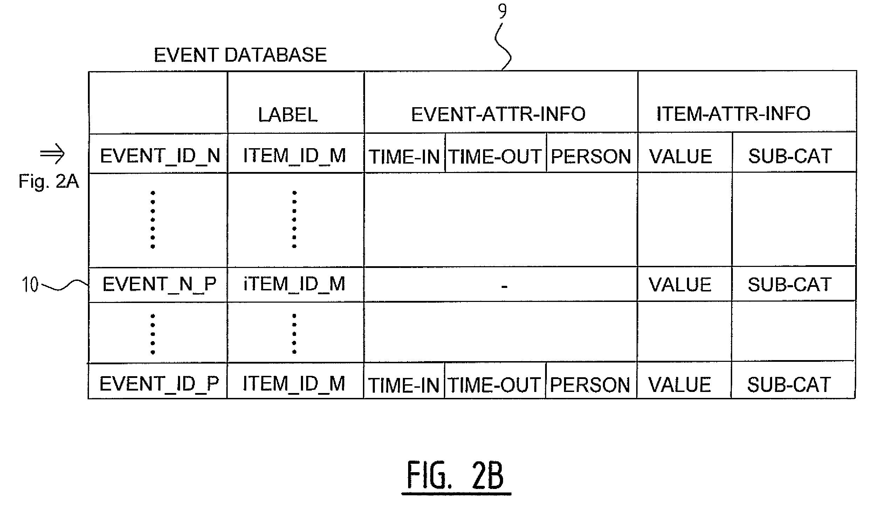

Figure 1 shows an exemplary embodiment of steps in the method and performed by the system according to the present invention. In particular in step 3) tables 1-7 in figure 2 of source data are read per table including headers and line-items per subcategory (pr is short for "purchase requisition", po is a "purchase order", gr stands for "goods received", iv stands for an "invoice", and "ac" denotes accounting). Such headers and line-items in source data tables 1-7 in figure 2 are common for the information system having a data structure in tables employed here for extracting a database as according to the present invention. Entries in the tables 1-7 of source data consist of transaction data, and optionally also item attribute information and/or event attribute information.

Any of the source files 1-7 in figure 2 could even be a log file, for instance for a particular company department, such as a mail room or an accounting department. Entries in these source tables 1-7 each contain highly detailed data that is processed jointly and using domain or organisational expertise (such as rules) to derive the events (assemblies of data entries in the tables or singular transactions) that occurred in the information system(s) as pertaining to the processes and sub processes in scope and to the level of detail desired. As such, the events and processes are thus clearly reconstructed for analyzing a posterior.

Item attribute information can comprise such information as an invoice value or an order value, a company code, a transaction type, the relevant fiscal year, a document type etc.. Each entry could further comprise a header line and information in any or all of the available subcategories (in this example: pr, po, gr, iv, ac).

The tables of source data (SD) constitute a source stored in at least one source memory, tables 1-7 in figure 2 could in fact be distributed over a great number of physically separate memories or separate databases (which could even be stored in a single memory or other storage), for example in a network. For instance here, the source is formed by a great number of tables 1-7 (of which only tables 1-7 are shown by way of non-limiting example) containing source data (SD) in base tables 1-7 of at least one information system. Merely by way of example, in the figure reference is made to the purchase to pay (P2P) process such as in any arbitrary information system, for instance programs for enterprise resource planning (ERP), and the like.

The present invention is, however, equally applicable for and in combination with other information systems. Further also administration systems could provide a source of transaction data from tables as in figure 1 for the present invention, in as far as files or tables forming a source in the sense of the present invention are relied on, which contain tables of source data, which contain the source data dispersed over the files or tables, or at least in a shape and form that is in particular suitable for other purposes than analyzing, for instance base files of bookkeeping or information systems, which contain most if not all of the relevant information, but in a shape and form that is only suitable for performing the intended task of bookkeeping, which is not at all structured in a shape and form that enables or is sufficient for analyzing the processes since these are too unstructured at least for analyzing, although all basic information is available therein.

In step 3) in figure 1 source tables 1-7 in figure 2 containing the source data are taken apart to free source data there from. In doing so, a beginning is made with restructuring the information by taking different subprocesses into account, for instance in relation to the above mentioned sub-categories pr, po, gr, iv, ac, et cetera.

In step 5) in figure 1, a process master table 8 in figure 2A is constructed. In this process master table 8 all combinations of header line and all subcategories (pr, po, gr, iv, ac) from the freed source data are entered, as well as all item attribute information, including those derived based on domain expertise, where available. Domain expertise is referred to here as prior knowledge about (some) aspects of processes, such as for instance business rules indicating for instance authorisations of persons / employees to allow payments of invoices up to a predetermined value, or similar considerations. Although it is less desirable, it is noted here that information can even be duplicated in the process master table 8, in so far as this is warranted by different perspectives of interest for subsequent analyzing of processes. However, although duplication is said here to be preferably avoided, it is certainly not excluded from the invention as described herein.

The function of this process master table 8 is thus twofold:
Firstly this process master table 8 serves as a basis for performing filtering functions, to obtain there from what events have played a role in a process performed on every single item. The items are recognisable in the process master table 8 on the basis of labels, that are assigned in the step of forming the process master table 8 to each individual item and corresponding to inherent contents thereof, such as the sub process identifiers and subcategories, as mentioned above, but the labels are individual to allow the items to be tracked through a series of events, in order to be able to reconstruct the sequence of events of each individual process trace (end-to-end; from any input end to any output end or from any initial start event to any subsequent finish or end event thereof), along which process traces each item or number of items progresses in the process for that item or those items. The labels are in such an embodiment generated for the event database on the basis of a chosen one of the identifiers in the en-to-end process.

The process master table 8 thus serves to allow tracking the progress of each item through the events in the process. Thus the process master table 8 is constructed with tracking information, often designated as Trace_ID's. For instance, but not exclusively, the process master table 8 is constructed to chronologically contain source information, but for a large number of items individually. The process master table could additionally or alternatively be constructed in a different manner than chronologically, for instance logically or grouped for distinct departments, or originating from separate source data tables, or in any other random ordering, etcetera. The labels allow for the appropriate conversion from the process master table to the event database. When source data is extracted and transformed to thus form a single unitary process master table 8 and the process master table 8 is then read and converted into the event database, the sequence of events can be reconstructed for each individual item, with respect to the sequence through which each individual item has passed (i.e. after the fact, and therefore a posterior).

In step 11) in Fig. 1 events are defined from one or more than one entry of lines of source data in the process master table 8. As a simplified example it is noted that one event can consist of a number of entries of the data from the source files 1-7, which can be dispersed over any number of separate files or tables 1-7 in the original format for the information system. The source data can contain entries for many separate actions, together in combination forming one event, for example:
* arrival at a specified time (mail room stamp or the like) of an item or document, such as an invoice, at a booking department,
* requesting from the information system, a unique identifier for the invoice (which could serve as a label in the sense of the present invention),
* linking the invoice (item) to the unique identifier,
* adding information with respect to the invoice (item), such as value of the invoice, originating company, bank account number of the originating company for payment, et cetera, to the item under the unique identifier,
* adding event attribute information, concerning for instance the person responsible for performing these separate acts,
* adding a time stamp indicating completion of the series of actions together making up the transaction / event.

In the process master table 8 these separate pieces of information from different source tables in the information system can be grouped, as indicated above, together as a single event, linked to a label, and with added thereto event attribute information (time stamp in, time stamp out, person involved, et cetera) and/or item attribute information (value, payment due date, et cetera) to arrive at a searchable event database 9 in figure 2. Additionally or alternatively, the groups can be derived from the master table 8, if the table 8 is sorted, for instance, on an aspect of interest, such as event_ID in the first column, or can be selected from mutually distant lines of the table 8, for instance using a selection criterion, such as the actions that together need to be grouped to form a transaction / event in respect of a specific item, or for a selection of items, et cetera. Both options (grouped actions or mutually distant actions forming an event) to be converted to corresponding events in the event database 9, are shown to the right hand side of the process master table 8 in figure 2, separated by the indication "OR". Also other information can at this stage already be generated and added to item attribute information, such as an indication of a minimum rank of a company officer allowed to authorise payment of invoices of the value in question (which is most often referred to as a rule or an organisational rule - sometimes even a business rule). Such additional information may or may not be included in the original source data, and if not present therein, such additional information may be generated on the basis of specific working knowledge of processes in an organisation, most often referred to as domain knowledge, since it involves knowledge from the domain in which the invention is being practiced (production, administration, bookkeeping, et cetera).

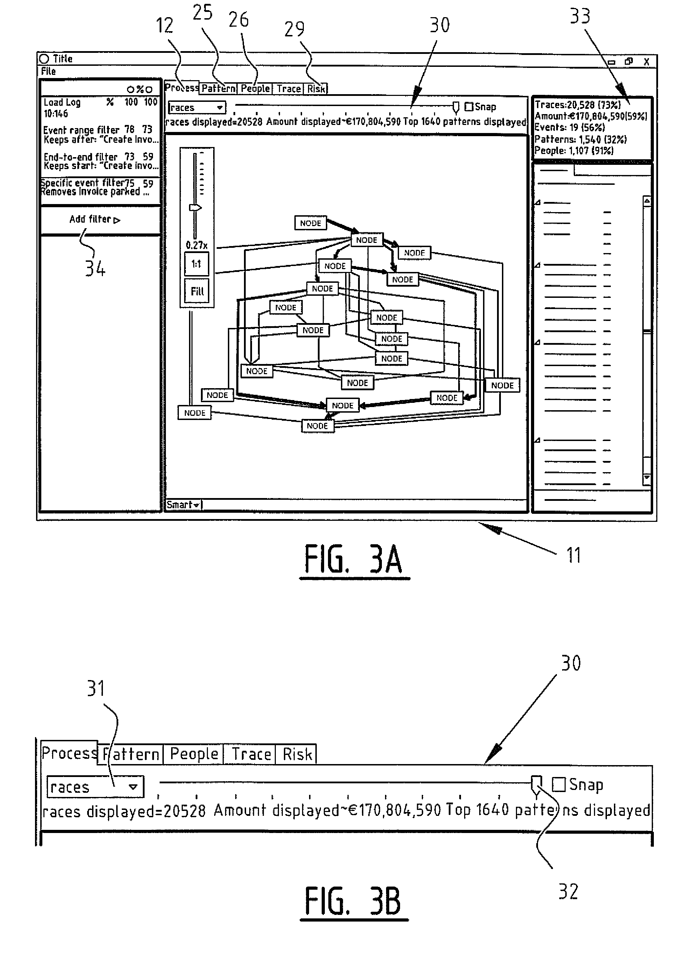

Later on, when actually analyzing a posteriori reconstructed processes (sequences of singular or groups of transactions or actions) through which individual items have passed, the time stamps (attribute information) which is originally already present in the transaction data may serve to identify where unwanted and unnecessary delays occurred or in which parts of an organisation capacity is insufficient to handle throughput of items sufficiently quickly. Authorisation information (another type of (item) attribute information) may serve later on to identify which company officers overstep their authorisation, and values corresponding with the actual monetary worth of each individual item (for instance an invoice; also one of many types of attribute information) allow for analyzing processes not merely on the basis of throughput volumes (numbers) of items (e.g. invoices), but even better: on the basis their individual or combined worth for (or cost to) the organisation (in addition to or as an alternative for volumes of items). Consequently, it has been made possible on the basis of the present invention to generate graphic representations (figures 3-7) immediately visualising individual or combined monetary and/or volume values as well as paths for the flow of items along events and the corresponding worth or costs thereof, which is a required degree of detail for purposeful accountant's or manager's audits to be possible, rather than only to be able to provide insight into volumes (numbers) of items passing through events or from one specific event to any other in a multi-node model.

The definition of what group of actions constitutes an event, depends largely on domain knowledge of an entire system and processes in question, and/or the inner workings of an organisation (and is therefore referred to as domain knowledge). In specific embodiments, the lines drawn between events may be different, or an embodiment is that any specific action on its own may constitute an event, or that the entire process constitutes of one single event. The actual invention as defined in the appended claims encompasses all such embodiments.

It is noted here that the event database 9 thus constructed in accordance with the present invention can also comprise handover information, for instance in the form of specific entry lines 10 in the event database 9, indicating a pass-on of an item from one event to at least one other event. In such an embodiment tracking an item (invoice) through a sequence of events is even further simplified, whilst such additional entries in the event database do indeed lead to more duplication of some data from the process master table 8. However, such handover information is preferably be determined from the event database 9 itself if it should not include dedicated entry lines 10 for this purpose, after construction thereof, if such handover information is needed, rather than be included therein, for instance to avoid duplications in the event database, even though query times could perhaps be decreased by such duplications. In step 15) in Fig. 1 algorithms and rules based on domain or organisational expertise can be applied to detect occurrences of combinations in or from the process master table 8. For example the detection of: payment without good receipt; open purchase order longer than a preset or settable number of days; and/or possible duplicate invoices. The results of these algorithms and rules are linked in the process master table 8 to the appropriate labels as attribute information.

In step 20) the database 9 in figure 2, which is constructed in accordance with the present invention, is ready for use with a graphic user interface including database software to perform inquiries.

In Fig. 2 a schematic representation is shown of steps taken in accordance with the present invention, to start from distinct source files and arrive at the searchable event database 9.

The thus realized configuration of the event database 9 in figure 2 allows for a high degree of versatility, in particular with respect to the degree of detail afforded by this database and manner of providing insight into said detail (as indicated above: emphasising combined monetary value passing from one event to at least one other event, rather than only volumes or numbers of items following the same route), but also with respect to the many different perspectives from which analysis of the data originating from the source files can be performed and the types of metadata that can be calculated based on these perspective such as information over handovers, process performance, patterns and the like.

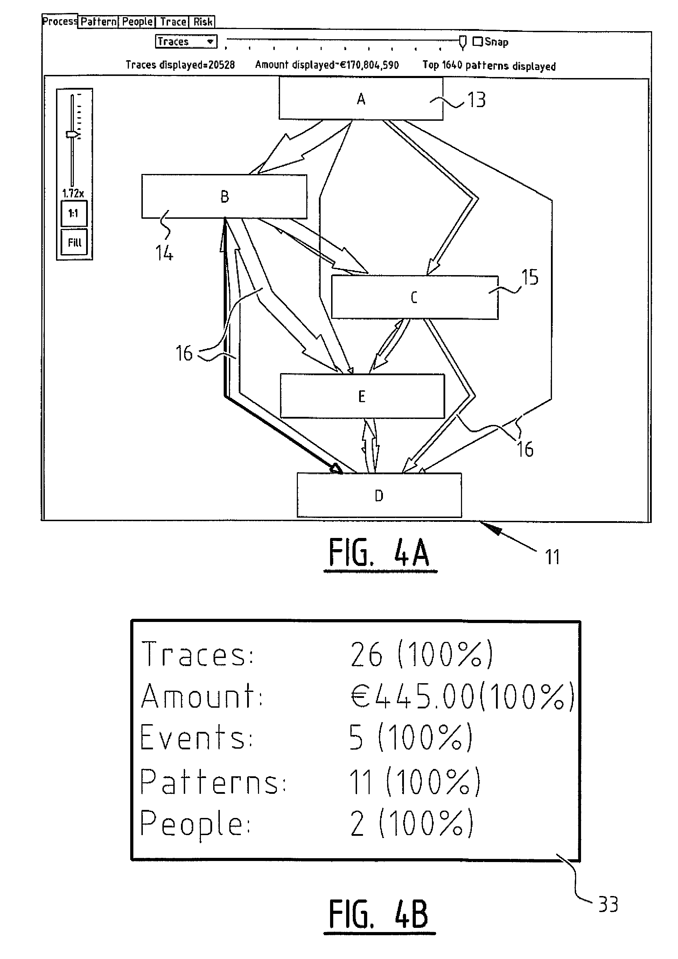

In particular in figure 3A a graphic user interface 11 is shown, where figure 4A shows a similar view in more detail, wherein the interface 11 is in each of the figures 3A and 4A based on or is co-acting with a program for acquiring desired information from the database 9 of figure 2, for instance using queries or filters, as described in more detail herein below. Figures 3A and 4A exhibit all information in the database (and consequently all information from the source files) in a representation based on the perspective "process", see the tab 12 at the top of figure 3. Such a representation from the perspective of the "process" may be the default view, or the result of a perspective change, after a user clicks on the relevant tab 12 with a pointing device (not shown) such as a mouse.

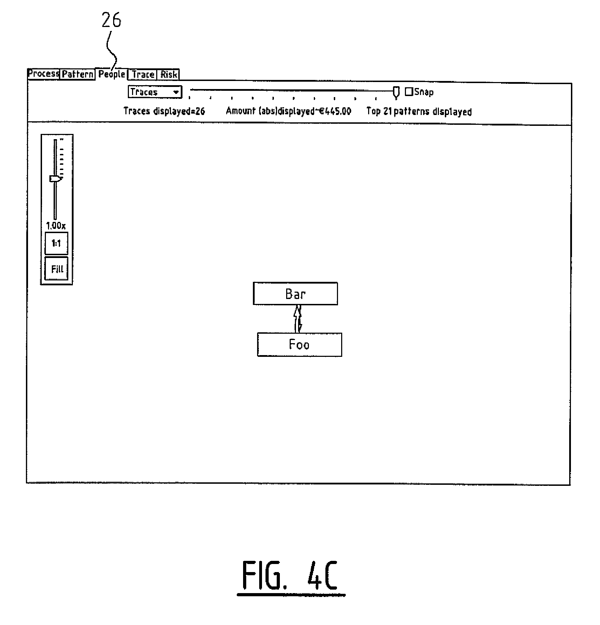

The graphic representation in the graphic user interface 11 then in figure 3A and 4A is set to provide a representation of processes of items of different nature (sub-categories) passing through events and from each event to at least one other event until the end event is reached. The events are identified as nodes 13, 14, 15 in the representation; as is more clearly shown in figure 4. The flow of items from one node 13, 14, 15 to a subsequent node 13, 14, 15, is represented by connecting lines, extending from one node to another, in so far as any item has in fact passed the relevant route, i.e. sequence of events.

Further, every item being passed along a line (trace) connecting a plurality of nodes contributes to the thickness or other volume or monetary value indication, such as a colour, of the relevant line. In the views of figures 3A, 4A the total value of all items thus handed over from one node 13, 14, 15, along connecting line 16 to another node, is used to determine the emphasis (thickness and/or colour or other indicator) of the relevant connecting line. This is only possible since the database 9 contains, in the item attribute information thereof, "value" information. By combining the values of all items that have passed along a single connecting line 16 (a trace) between two nodes 13, 14, 15, the thickness and/or colour of the connecting line can be made to correspond with this thus combined total value, rather than (as in the prior art) merely a volume emphasis based on numbers of items passed along such a singular portion or connecting line 16 of a route travelled by items between to events / nodes 13, 14, 15. Such a representation may serve very well to intuitively already provide a clear indication of the processes followed most or least in terms of frequency (volume) or value, thus already pointing out anomalies and main streams.

Figure 3B shows a detail from figure 3A, more clearly visualizing an embodiment of a slide ruler 30, to be employed in a graphic user interface / query program 11, to set a level of fineness of the graph, while maintaining a goodness of fit of 1.0, which is considered to be highly extraordinary. By setting a desired fineness aspect using a scroll down 31 (in the views of figures 3A and 4A "traces", but alternatively any other setting) the setter 32 of the slide ruler 30 ruler can be dragged by a user to the left using a pointer device, such as a computer mouse, to set a lower fineness level for the chosen aspect. Dragging the ruler 30 to the right will increase fineness. The representation in the graph will preferably be correspondingly adapted simultaneously.

It is noted here that figure 4A comprises a representation of a less elaborate process assembly than that of figure 3A. In figure 4B, a summary 33 of the graphic representation in figure 4A is provided to a user, and is a part of the graphic user interface / query program 11, see for example the top right hand corner of figure 3A. As set out in figure 4B, the graphic representation of figure 4A provides information to the user about 26 traces, equalling a total value of $ 446, =, and the thus reconstructed processes comprise 8 events (nodes 13, 14, 15). The processes further comprise 11 patterns, but are conducted by only two people.

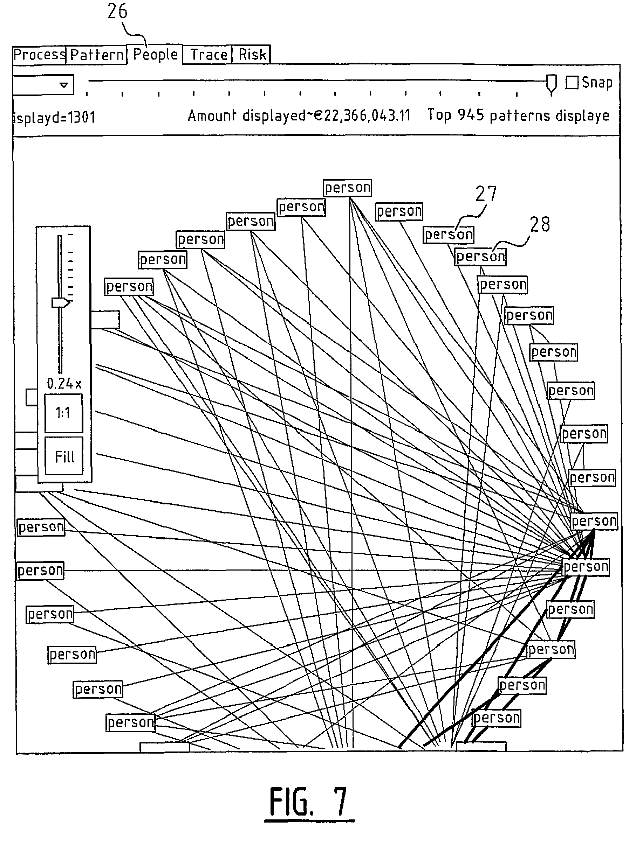

By changing the perspective from figure 4A to that of figure 4C, after clicking an appropriate one 26 of the perspective buttons 12, 25, 26, 29, the user is presented with another representation of the same processes, but from the perspective of "people". Thus, the user is presented with information about how these two persons are involved in all eight events of figure 4A. From figure 4C it becomes apparent, the two persons involved in the events of figure 4A appear to be supplying each other with items a number of times before processes finish. From this change in perspective from figure 4A to figure 4C, the user should not automatically deduce that each of these two persons is restricted in his or her tasks to any of the events or nodes 13, 14, 15, and these person's roles in the processes may very well vary. Whilst the representation of figure 4C corresponding with the processes view of figure 4A is relatively simple, figure 7 provides a representation of what the graphic user interface may reveal from the perspective of people to a user in correspondence with a more complex processes view.

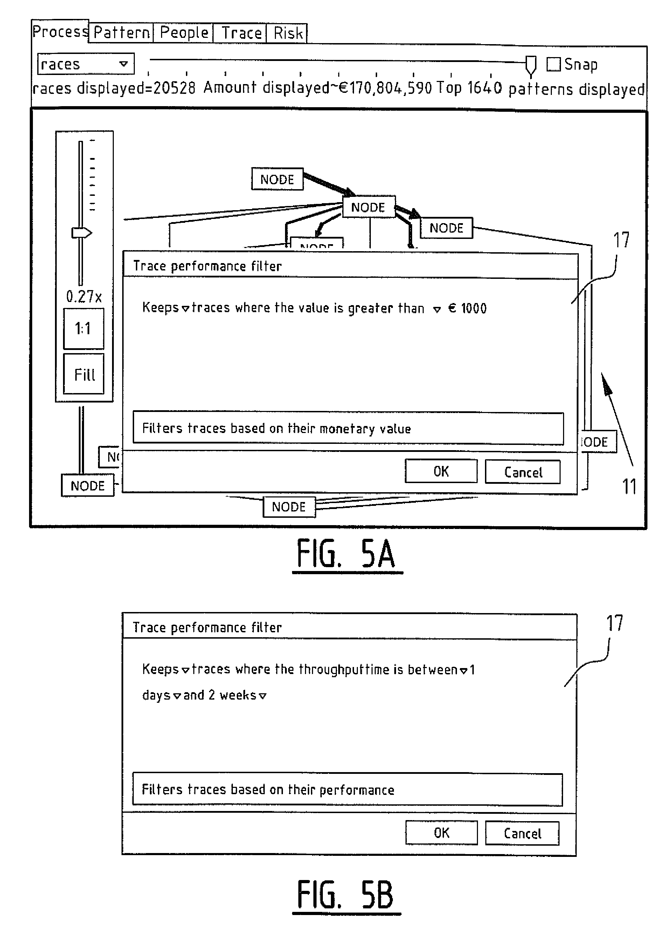

Figure 5A then shows how a user can set the graphic user interface and query program 11, using filter functions in a dialogue box 17, to direct attention on specific information of interest. For instance, in the example as shown in figure 5, the dialogue box presents a user in practically spoken language with a filter function, enabling the user to concentrate exclusively on items each representing a value of more than € 1000,=. This is one suitable example of the great advance afforded by the present invention; the "value" entry in the database 9 allows such selection, whereas in log files such value information is either not included and/or not linked through the log so that the display of flow of items between events / nodes 13, 14, 15 cannot reflect the value and/or the connecting line cannot be emphasised on the basis of any such total value. All filters are designed to reduce the number of full items in the scope of the current analysis and visualisation in a transparent way, remaining with a goodness of fit of 1.0 for the remaining items in scope. This is vitally important for indepth analysis, for example for accountant's audits, to keep the goodness of fit this high and reliable and accurate, which is only possible as a consequence of the manner of constructing the event database, incorporating therein all information and data from the tables 1-7 in figure 2, which are provided as a mere example.

It is noted here that figure 5B shows a similar dialogue box 17, containing a different filter function than figure 5A for the user to set after having selected this filter function from a generic filter field 34 in the graphic user interface / query program 11, see for example in figure 3A on the left. In the embodiment of figure 5B, the filter function is set to reveal all traces for which the throughput time was between 1 day and 2 weeks. All parameters for this filter can be set by a user, using pull down or scroll down menus in the dialogue box 17. The information represented after such a filter selection could reveal how many processes are concluded within the set time range, which is for instance considered beforehand to be acceptable. Alternatively a user may set the parameters for this filter to show how much of the processes are not concluded within this desired (acceptable) processing (throughput) time, to identify on the basis thereof if the organisation contains any bottlenecks or other problems, that may require solving.

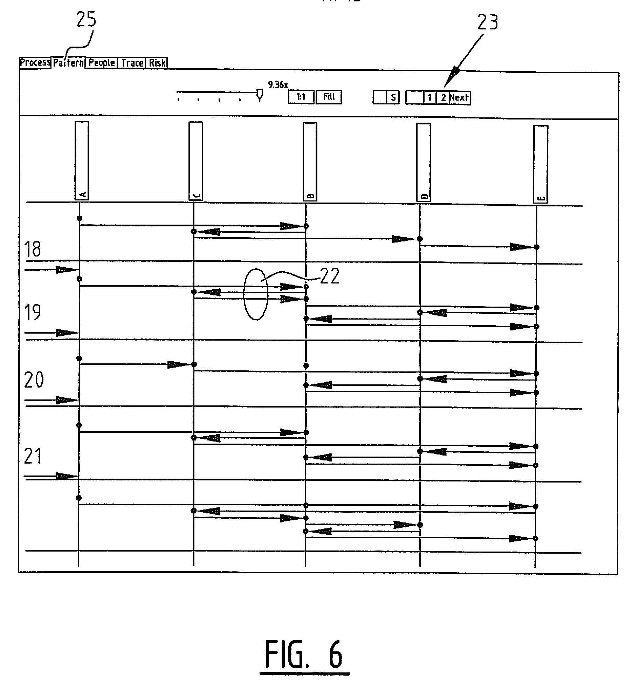

Figure 6 shows the graphic user interface and query program 11 set to a different perspective than figures 3-5, i.e. from the perspective of "patterns". To achieve this perspective this may be the default perspective, or a user has clicked the tab "pattern" 25. The representation from the perspective "pattern" is acquired from the database 9 by selecting therefrom all paths of all items along the same sequence of events / nodes 13, 14, 15, per sequence. Each representation 18, 19, 20, 21 in figure 6 therefore shows one path along a plurality of events / nodes 13, 14, 15, corresponding with the view of figure 4A, along which some of the items have all passed. The top path 18 is the most popular in terms of volume or value or any other aspect of interest; most of the items in the database 9 will have passed through an organisation along this path 18. Path 18 is also the most simple, with only a minimum number of loops or diversions. In contrast path 19 contains more loops, and is therefore more complex and uses more resources of an organisation. The database 9 according to the present invention thus allows for detecting with the interface and query program 11, whether organisation resources are used well or inefficiently.

The graphic representation of figure 6 can be adapted in many different manners, for instance the least popular paths on top (reverse from the representation in figure 6), and/or using the previously described filters (which may also be used to adapt the figure 6 representation), et cetera.

Further, as indicated above, figure 7 shows a display of the graphic user interface and query program 11, in which the perspective of "people" is chosen using the tab "people" 26 at the top for a set of processes involving many more people than the very simple representation of figure 4C. In this manner all interactions between people can be visualised, and where desired filtered, since the database 9 contains all relevant information, in particular in the event attribute information "person" in figure 2B.

Using this perspective on the processes in an organisation lays bare the interaction between persons, represented by nodes 27, 28 in the view of figure 7.

The views according to different perspectives and the correspondingly calculated metadata in figures 6 and 7 relative to figures 3-5 all have a goodness of fit with the source data of 1.0, without containing spurious correlations.

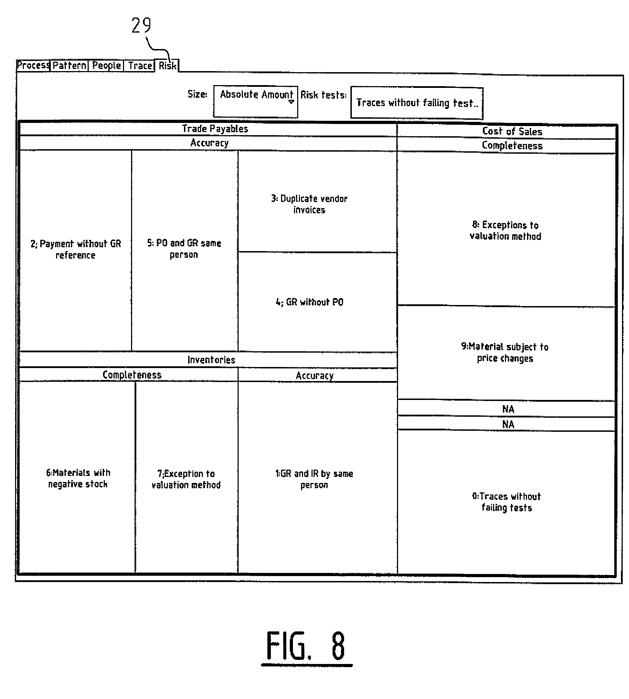

The representation of figure 8 is quite unique in itself, and provides insight into the processes from the perspective of "risk", resulting from or generated from clicking the tab "risk" 29. The visualized information of figure 8 lays bare if any transgressions of the domain or organisational rules (described above) have taken place. This shows where an organisation is vulnerable to any risks of whatever kind, in so far as the organisational or domain rules were devised to avoid such risks. Supposing one such rule is to not allow any employee to authorize payment of an invoice having a value above a threshold. The organisational or domain rules will then reflect such safeguards, and be incorporated into the event database at one time or another during the constructions thereof (as described above in one possible embodiment). The representations of figure 8 will then show (retro-actively and fully reliably from the a posteriori analysis resulting in the event database 9) that transgressions of these rules has occurred. By using appropriate filter or other setting, the user can "zoom in" on the actual transgressions, and identify the frequency and / or the monetary value of the transgressions and also the individual employees involved and take appropriate measures, provided the monetary value or frequency of the transgressions warrants such corrective action. Alternatively, it may turn out that the transgressed rule in practice presented the organisation with a problem, and the transgressions of those rules with a workable solution. This is up to the end user of the graphic user interface / query program 11, that is proving to be very useful for even such analyzing, when used in conjunction with the database constructed in accordance with the present invention.

Although above merely a quite restricted overview is provided of the possibilities of a method and system according to the present invention, such benefits and advantages mainly reside in the possibilities for a user, employing a graphic user interface and possibly also a query program, but where such advantages are the direct result of the manner in which the database is constructed, avoiding log files as a basis in favour of the much more detailed but difficult to handle transaction data including specifically derived information, preferably employing domain or organisational expertise (rules, rather than any preconceived statistical notions of the manners in which items follow processes) as well as employing logic to create visualisations and calculations that have a goodness of fit of 1.0, without spurious correlations, and thus providing full detail to the aforementioned end user. Nonetheless, it will be evident that the present invention is in no way to be restricted to any specifically described embodiment, in particular not of any graphic user interface and corresponding query program, but the invention is in contrast only to be assessed in the scope and spirit thereof on the basis of the appended claims, in particular the appended independent claims.

## Claims

1. A method to analyze at least one process comprising at least one transaction of handling at least one item, the method comprising:
- creating a database containing all information with respect to transactions on the item,
**characterized by**:
- gathering from at least one source, such as a tables in an information system, all data with respect to each previously completed transaction in the process on each of the at least one item;
- assigning an identifying label to each of the at least one item; and
- arranging the data with respect to each performed transaction in the process on each of the at least one item with the label assigned thereto in the database, so as to allow distilling from the database at least one sequence of previously performed transactions in the process with respect to each of the at least one item on the basis of the label assigned thereto.

2. The method as defined in claim 1, further comprising: distilling from the at least one source: item attribute information with respect to each of the at least one item handled in the transactions through the process, such as a value of an invoice or of a purchase order, or any other item attribute information, and arranging the item attribute information in the database, so as to allow distilling the item attribute information with the sequence from the database.

3. The method as defined in claim 1 or 2, further comprising: distilling from the at least one source: transaction attribute information with respect to the at least one transaction in the process, such as an arrival time to indicate a time of arrival of the item or transaction, a completed time indicating a completion time of the transaction, an employee identification with respect to an person who previously performed the transaction, or other transaction attribute information, and arranging the transaction attribute information in the database, so as to allow distilling the transaction attribute information with the sequence from the database.

4. The method as defined in claim 1, 2 or 3, further comprising: distilling from the at least one source: handover information indicating a path of one of the at least one item from one transaction in the process to another, so as to allow directly distilling a sequence of transactions in the process for any item from the database.

5. The method as defined in any of the preceding claims, further comprising: providing the database with selectable aspects, so as to allow the database to be searched using a query from one of a plurality of perspectives on the process.

6. The method as defined in any preceding claim, further comprising: adding organizational or domain rule attribute information with respect to at least one item handled in the transactions through the process, such as an authorization level for payments of invoices or of a purchase order, or any other rule attribute information, and arranging the rule attribute information in the database, so as to allow distilling the rule attribute information from the database and allow risk assessment.

7. The method as defined in claim 5 or 6, wherein selectable perspective aspects are taken from the group, comprising "process", "pattern", "people", "risk", and the like.

8. The method as defined in any one of the preceding claims, further comprising including in the database duplicate entries.

9. The method as defined in any one of the preceding claims, further comprising: providing a graphic user interface and query program for searching the database and visualizing results thereof, wherein the graphic user interface and query program is arranged to reconstruct a posteriori all processes for each item individually using the database, to enable presentation, for instance through visualization, of a reconstruction of the processes to a user thereby taking into account each and every actual relation, resulting in a reconstruction with a goodness of fit of 1.0 and without spurious correlations.

10. The method as defined in claim 9, further comprising providing filtering functions as queries.

11. The method as defined in claim 9 or 10, further comprising presenting queries of the query program in a dialogue box in normal speaking language.

12. The method as defined in claim 9, 10 or 11, further comprising: providing selectors for a user to adapt a perspective on analyzed processes in an organisation with.

13. A system to analyze at least one process comprising at least one transaction of handling at least one item, the system comprising:
- a memory to store a database containing information with respect to transactions on the item,
**characterized by**:
- at least one source memory containing data, such as a tables in an information system, with respect to each previously completed transaction in the process on each of the at least one item;
- a processor arranged to:
* gather from at the source memory data with respect to each previously completed transaction in the process on each of the at least one item;
* assign a label to each of the at least one item; and
* arrange the data with respect to each performed transaction in the process on each of the at least one item with the label assigned thereto in the database, so as to allow distilling from the database at least one sequence of previously performed transactions in the process with respect to each of the at least one item on the basis of the label assigned thereto.

14. The system of claim 13, further comprising a graphic user interface / query program, loaded into a or the processor, to allow for access to the event database and selectively retrieve desired information therefrom on the basis of any or more than one of: labels; rule attribute information; item attribute information; transaction attribute information; and / or handover information incorporated by the processor into the event database, during construction thereof.

15. A database as constructed in accordance with any one of the previous method claims 1-11.
